# EUROPEAN PATENT APPLICATION

(11) **EP 3 825 214 A1**
(43) Date of publication of application: **26.05.2021**
(21) Application number: 19210147.5
(22) Date of filing: 19.11.2019
(51) Int. Cl.: B62D 27/06, B62D 33/04, B62D 47/02

(54) **AN ELECTRIC VEHICLE BODY AND UNDERBODY**

(71) Applicant: Arrival Limited, London W14 8TS (GB)
(72) Inventor: ALLUM, Joe James, London, W14 8TS (GB); BION, Patrick Christopher, London, W14 8TS (GB)
(74) Representative: Durling, Barbara Eleanor Ravenhill

(57) **Abstract**

An electric vehicle is disclosed, which includes an underbody chassis having an upper side and a lower side. Between the upper side and the lower side, at least one of a battery and an electric motor of an electric powertrain of the vehicle is contained. A structural body portion of a vehicle body is provided for fixing to the underbody chassis. Each of the structural body portion and the underbody chassis comprises a plurality of mounting structures, each mounting structure on the structural body portion is arranged to mate with a respective mounting structure on the underbody chassis. A method of assembling the electric vehicle is also disclosed.

## Description

### Field

The present disclosure relates to an electric vehicle, to a body for an electric vehicle and to an underbody for an electric vehicle. More specifically, it relates to these elements where the electric vehicle is a commercial electric vehicle, such as a bus or van.

### Background

In designing electric vehicles, established automotive manufacturers often carry over engineering thinking from their experience of conventional vehicles powered by internal combustion engines (ICEs). This makes sense. These large manufacturers have spent many years and often billions of dollars in the research and development of methodologies, technologies and components for these conventional vehicles. Many of them have been hugely successful in this. Reusing that work when developing and manufacturing electric vehicles is therefore less expensive and quicker than doing this all again. This approach is encouraged by having have workforces of tens or hundreds of thousands of people, established R&D centres and vast manufacturing facilities that for years have been focussed on optimising the design and manufacture of these conventionally powered vehicles.

There are however problems with this. Engineering thinking and technologies that are optimised for vehicles powered by ICEs are not necessarily optimised for electric vehicles. The different powertrains have different characteristics. By using engineering thinking in an electric vehicle that is optimised for the legacy ICE powertrain, the resulting vehicle will almost inevitably be much like the vehicle it seeks to replace. It will not make full use of the characteristics of the electric powertrain. It will not be optimised.

International Application No. PCT/GB2018/052415 describes one area in which established, legacy thinking has been resisted and, instead, fresh thinking has been brought to the design of electric vehicles. (The technology described in that application was developed by the same organisation as the technology described in the present disclosure.)

PCT/GB2018/052415 describes a chassis for an electric vehicle, which is perhaps better considered an 'underbody' of the vehicle. The underbody described in PCT/GB2018/052415, which is shown at 100 in Figures 2 and 3 of that document, has an upper side and a lower side. These two sides are spaced apart to create a cavity between them. The cavity is used to accommodate the electric powertrain of the vehicle. In this way, the powertrain is contained within the underbody.

This approach makes good use of the characteristics of the electric power train. By accommodating the powertrain within a long, flat underbody that runs the length of the vehicle, there are several packaging, performance and manufacturing benefits. These are set out in PCT/GB2018/052415.

A problem remains, however, of how to provide a body for a vehicle of which an underbody such as that described in PCT/GB2018/052415 forms part. In particular, how should such a body be optimised to make best use of the potential of an electric powertrain? How should it be optimised to work with an underbody such as that described above? How should the two go together?

### Summary

In general terms, the approach of the present solution is to provide parts of a vehicle body and parts of a vehicle underbody (an underbody, for example, as described in PCT/GB2018/052415) each with interfacing portions that interface to locate the vehicle body relative to the underbody and to provide the structural support for that body and hence for the vehicle.

According to one aspect, there is provided an electric vehicle comprising:
an underbody chassis, the underbody chassis comprising an upper side and a lower side and containing, between the upper side and a lower side, at least one of a battery and an electric motor of an electric powertrain of the vehicle; and
a structural body portion of a vehicle body for fixing to the underbody chassis,
wherein each of the structural body portion and the underbody chassis comprises a plurality of mounting structures, each mounting structure on the structural body portion arranged to mate with a respective mounting structure on the underbody chassis.

By providing these features, it is possible to easily and quickly assemble the structural body portion and hence the vehicle body to the underbody chassis. Also, the underbody chassis is able to provide structural support for the vehicle body. Manufacturing and assembly costs and times are lower than with legacy approaches.

The vehicle of the first aspect may comprise the vehicle body, as well as comprising the structural body portion of the vehicle body.

The structural body portion may be arranged to support the body of the vehicle on the underbody chassis. It may also form at least part of the safety cell of the vehicle. The structural body portion may comprise a plurality of structural members. The structural members may form part or all of a frame of the body. The frame may be part or all of the safety cell of the vehicle. The vehicle body may comprise one or more body panels. The or each panel may be formed of composite material. The or each body panel may be fixed to the structural members. The or each panel may be partly structural. The vehicle body may be a monocoque. The monocoque may comprise the structural body portion that is for fixing to the underbody chassis. The structural body portion may be integrally formed with the rest of the monocoque. The monocoque may be a monocoque insofar as this is possible with a separate underbody chassis. The structural members may comprise some or all of the mounting structures of structural body portion. Those mounting structures may be formed in ends of the structural members. Those ends of the structural members may be formed as castings, the mounting structures being at least partly formed by that casting (with or without subsequent machining). Other parts of the mounting structures, or other mounting structures, may be formed by extrusions.

The mounting structures on the structural body portion and on the underbody chassis are located to locate the structural body portion (and thereby the vehicle body) relative to the underbody chassis when the respective structures mate. The mounting structures on the structural body portion and on the underbody chassis are profiled to provide structural support of the structural body portion and thereby the vehicle body) relative to the underbody chassis when the respective structures mate and when the structural body portion is fixed to the underbody chassis. The mounting structures on the structural body portion and the mounting structures on the underbody chassis may be profiled such that the mating mounting structures have substantially matching profiles. One of each mating pair of the mounting structures may have a male portion that is received in a female portion of the other of the mating pair. The male portion may be tapered from its base to its end to help with location during assembly. The female portion may be correspondingly tapered.

The vehicle (or a sub-assembly of a vehicle) may comprise fixing means to fix the structural body portion to the underbody chassis. The fixing means may be mechanical and/or chemical fixing means. The fixing means may be, for example, a fastener. The fixing means may be, for example, an adhesive. The fixing means may be applied at the interface between each mating pair of mounting structures.

The underbody chassis may be a chassis substantially as described in PCT/GB2018/052415. The upper side of the underbody may be - or may substantially correspond to - an internal floor of the vehicle. The underbody chassis may contain the or each battery, and/or power electronics and/or control electronics and/or the or each motor of the electric powertrain of the vehicle. The underbody chassis may contain substantially all the components of the electric powertrain of the vehicle. The upper side of the underbody chassis may extend substantially between the front and the back of the vehicle and between its sides. The upper side may extend substantially to the front and the back of the vehicle and to each side. The upper side may be substantially flat. The upper side may extend between wheel arches of the vehicle. The upper side may extend between and around wheel arches of the vehicle. The upper side may not extend substantially to the front of the vehicle. The upper side may extend towards the front of the vehicle but be spaced therefrom.

The underbody chassis may comprise a plurality of modules, each module being a section of the underbody chassis. The sections may be longitudinal and/or transverse sections. The sections may fit together to form the underbody chassis. One or more of the sections may be substantially the same, for example as a result of being sections of the same extrusion or formed as castings from the same mould.

The mounting structures of the underbody chassis may be formed in structure of the underbody chassis or fixed thereto. The mounting structures of the underbody chassis may be formed in structure of the underbody chassis by casting. The mounting structures of the underbody chassis may be formed as castings in the cast sections of the underbody chassis.

The electric vehicle may be a commercial electric vehicle. It may be a vehicle for transporting cargo. It may be a vehicle for transporting people. It may be a bus. It may be a van. It may be a delivery van. It may be another type of commercial vehicle. It is envisaged that the electric vehicle is a wholly electric vehicle, that is, without an internal combustion engine either as a prime-mover or as a range-extender to be used to power a generator to generate electricity for charging batteries or powering a traction electric motor.

According to a second aspect, there is provided a structural body portion as defined in the first aspect above.

According a third aspect, there is provided an underbody chassis as defined in the first aspect above.

According to a fourth aspect, there is provided components for an electric vehicle, the components comprising:
an underbody chassis, the underbody chassis comprising an upper side and a lower side and arranged to contain, between the upper side and a lower side, at least one of a battery and an electric motor of an electric powertrain of the vehicle; and
a structural body portion of a vehicle body for fixing to the underbody chassis,
wherein each of the structural body portion and the underbody chassis comprises a plurality of mounting structures, each mounting structure on the structural body portion arranged to mate with a respective mounting structure on the underbody chassis.

It is envisaged that optional features of the first aspect are also optional features of the fourth aspect.

According to a fifth aspect, there is provided a method of assembling an electric vehicle or sub-assembly for an electric vehicle as defined in any aspect above. According to the fifth aspect, the method may be a method for assembling a structural body portion and an underbody chassis for an electric vehicle, the method comprising:
mounting the structural body portion to the underbody chassis such that the mounting structures on the structural body portion mate with the mounting structures on the underbody chassis; and
fixing the structural body portion to the underbody chassis.

It is envisaged that the method of the fifth aspect may further comprise providing any of the optional features from the first to fourth aspects.

### Brief Description of Drawings

Specific embodiments are described below in the Detailed Description by way of example only and with reference to the accompanying drawings, in which:
Figure 1 shows, in perspective view, components of an electric van, including a structural body portion of a body of the van and an underbody chassis of the van;
Figure 2 shows, in elevation, structural members the structural body portion;
Figure 3 shows, in perspective view, detail of one of the members of the structural body portion;
Figure 4 shows detail one of the members of the structural body potion and detail of the underbody chassis, the two components spaced apart from each other; and
Figure 5 shows the components shown in Figure 4 placed together and fixed to each other.

### Detailed Description

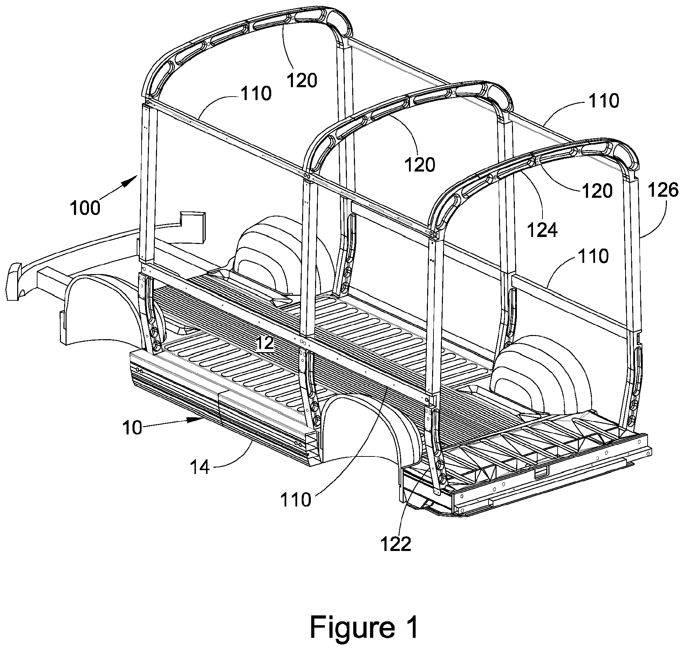

Figure 1 shows components of an electric van. Only some components of the van are shown. Visible in Figure 1 is an underbody chassis 10 of the van. Also shown is a structural body portion of a body of the van formed of several structural members 100.

The underbody chassis 10 - which from here will be called simply the 'underbody' - has as upper side 12 and a lower side (not visible, but indicated at 14). There is a cavity between the two sides. Components of the electric powertrain (not visible) of the van are housed in the cavity between the upper side 12 and the lower side 14. These components include the batteries, power electronics, control electronics for controlling the batteries and the power electronics, and electric drive motors.

As can be seen, the underbody 10 forms a low-profile base for the vehicle aligned generally in the plane of the axes of the vehicle's wheels. It looks a bit like a skateboard, but with a thicker 'board' to accommodate the electric powertrain. This has several packaging, manufacturing and performance benefits for the vehicle. In terms of packaging, it gives rise to a long, low, flat floor of the van. This allows good use to be made of the internal space of the van and makes it easier to load and unload cargo. Manufacturing and assembly is also improved and will be seen below. Finally, housing heavy powertrain components low down in the underbody 10 improves vehicle dynamics.

The underbody 10 is similar to the arrangement described in PCT/GB2018/052415. Indeed, aspects of that disclosure may be helpful to the skilled reader in understanding the present disclosure and in putting embodiments described herein into effect. As will be seen, the present underbody 10 does however differ from that described in PCT/GB2018/052415.

The underbody 10 is made up of a plurality of sections. Some of these sections are cast aluminium. Some of these sections are aluminium extrusions. Some of the cast sections are substantially the same as each other, having been cast in the same mould, or in moulds designed to be substantially the same. The sections fit together to form the underbody 10. The sections are fixed together by adhesive and by mechanical fixings. Thus, the underbody 10 is modular. The mechanical fixings can be, for example, threaded fasteners engaged with corresponding holes or inserts. The holes or inserts can include a complementary thread for engaging the threaded fasteners, or the threaded fasteners can be configured to form complementary threads in a hole or insert during assembly.

The structural members 100 of the body of the van that are also shown in Figure 1 will now be described. The structural members 100 form a frame for the body of the van. This frame is to support body panels which are not shown in the figures. The structural members 100 are made up of straight members 110 that extend in the front-to-back direction of the vehicle and u-shaped members 120 that extend up one side of the vehicle, across the top of the vehicle and down the other side - like an inverted u-shape.

Figure 1 shows three u-shaped members 120. Each of the u-shaped members is the same. This simplifies manufacturing and assembly, and lowers cost. One of the u-shaped members 120 is fixed to the underbody 10 at the back of the vehicle behind the rear wheel arches, another one 120 is fixed just in front of the rear wheel arches and the third one 120 is fixed just behind the front wheel arches.

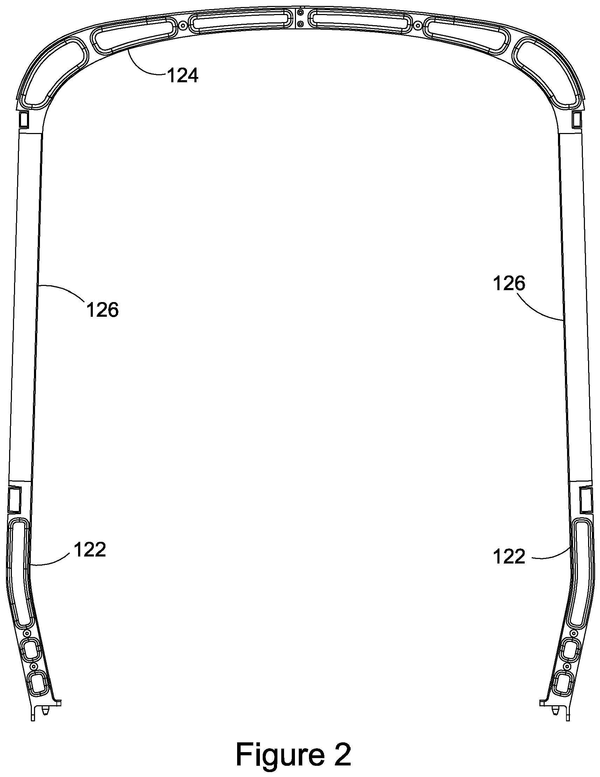

Each u-shaped member 120 is formed of several sections. These will be now described with reference to Figure 2. Some of the sections are cast from aluminium. Some of the sections are extruded aluminium. The foot section 122 of each u-shaped member 120 that is next to and fixed to the underbody 10 is cast. These foot sections 122 will be described in more detail with reference to the later figures. The top section 124 of each u-shaped member 120 that extends across the top of the vehicle is also cast. Straight pillar sections 126 that extend between each foot section 122 and the associated top section 124 are extruded.

Returning to Figure 1, the straight members 110 (that make up the frame together with the u-shaped members 120) extend between the u-shaped members 120 in a direction along the length of the vehicle. They are fixed to the u-shaped members 120 using mechanical fixings in the form of threaded fasteners engaging complementary holes or inserts (tapped or untapped).

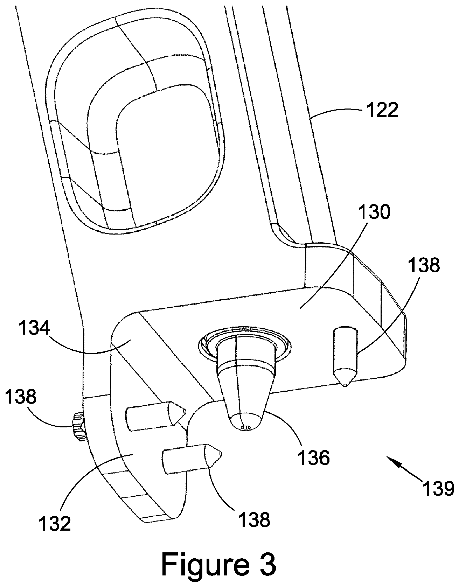

Figure 3 shows, in more detail, a foot section 122 of one of the u-shaped structural members 120. The foot section 122 is shaped so as to have, at its lowest end, a flat top surface 130 and a flat side surface 132 perpendicular to it. The two surfaces are joined by an internal filet radius 134. The top surface 130 has a conical locating pin 136 mounted in it, tapering towards its tip. The pin 136 can be fit after casting of the foot section 122, or it can be cast together with the foot section. The material from which the pin 136 is made can be selected to best suit the mode of manufacturing. For example, the pin can be formed of aluminium or plastic. The top surface also has a hole formed in it for receiving a bolt 138. That hole is formed on the side of the conical pin 136 furthest from the radius 134. The side surface 132 has two holes formed in it, each for receiving a bolt 138.

Together, as will be seen, the top surface 130, the side surface 132, the radius 134, the conical locating pin 136 and surrounding surfaces of the foot section 122, all form male mounting structure 139 for mounting the structural members 100 and hence the vehicle body to the underbody 10. The interfacing surfaces of the foot section 122 (and other interfacing regions) can be machined after casting, for example, to increase accuracy of critical dimensions for mating parts.

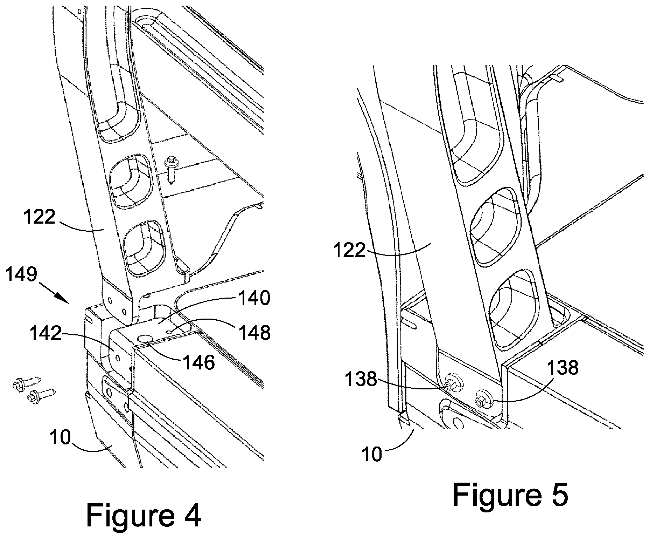

Corresponding mounting structure of the underbody 10 will now be described with reference to Figure 4.

Figure 4 shows a cast aluminium section of the underbody 10. This section is shaped to form female mounting structure 149. The female mounting structure 149 is shaped to mate with the male mounting structure 139 of the foot section 122 of the vehicle body. The female mounting structure 149 therefore has a recessed top surface 140 to interface with the top surface 130. It also has a recessed side surface 142 to interface with the side surface 132. The top surface 140 of the female mounting structure 149 has a hole 146 formed therein to receive and locate the conical pin 136. The top surface 140 and the side surface 142 have holes formed therein to align with and receive the bolts 130 of the foot section 122. Walls of the female mounting structure 149 that project from the two recessed surfaces 140, 142 to define the associated recesses are shaped and configured to interface with surfaces of the foot section 122 that surround the foot section's top surface 130 and side surface 134 when the two components are mated. The overall arrangement is such that the foot section fits in the underbody 10 with the two mounting structures 139, 149 mating.

In assembly of the vehicle, and with reference to Figure 1, the frame of the vehicle is assembled by assembling the structural members 100 to give the arrangement described above. The assembled structural members 100 are then introduced to the underbody 10 such that the male mounting structure 139 of each of the foot sections 122 of the structural members 100 mates with corresponding female mounting structure 149 of the underbody 10. As part of this, the conical locating pins 136 are inserted into the corresponding holes 146 in the underbody 10, bring the foot sections 122 and hence the structural members 100 into correct alignment and location relative to the underbody 10. This arrangement is shown in Figure 5.

The bolts 138, which in this embodiment are self-tapping bolts, are then fixed into place through the holes in the foot sections 122 into the corresponding holes 148, fixing the combined assembly.

The corresponding and cooperating profiles of the male mounting structure 139 and the female mounting structure 149 result in good location of the structural members 100 relative to the underbody 10 and in providing a high degree of structural support to the combined structure.

In other embodiments it is envisaged that an adhesive, such as glue, may be used to fit the foot sections 122 to the underbody 10.

It is also envisaged that various types of body panel may be used with the structural members 100 described above to form the vehicle body. These may be panels formed of composite material. It is also envisaged that the structural members 100, or their functional equivalents, may be incorporated into a monocoque or part-monocoque body, that body providing the foot sections 122 or the male mounting structure 139 thereof to mate with the female mounting structure 149 of the underbody 10.

By using the approaches disclosed in this document, better use can be made of the characteristics of an electric power train. In particular, by using the present approaches, the manufacturing and assembly of an electric vehicle can be easier, simpler and less expensive, and a commercial electric vehicle with better packaging and hence better performance as a commercial vehicle can also be provided. This is the case when compared with vehicles based on approaches carried over from and optimised for ICE powertrains.

## Claims

1. An electric vehicle comprising:
an underbody chassis, the underbody chassis comprising an upper side and a lower side and containing, between the upper side and a lower side, at least one of a battery and an electric motor of an electric powertrain of the vehicle; and
a structural body portion of a vehicle body for fixing to the underbody chassis,
wherein each of the structural body portion and the underbody chassis comprises a plurality of mounting structures, each mounting structure on the structural body portion arranged to mate with a respective mounting structure on the underbody chassis.

2. An electric vehicle according to claims 1, wherein the mounting structures on the structural body portion and on the underbody chassis are located to locate the structural body portion relative to the underbody chassis when the respective structures mate.

3. An electric vehicle according to any preceding claim, wherein the mounting structures on the structural body portion and on the underbody chassis are profiled to provide structural support of the structural body portion relative to the underbody chassis when the respective structures mate and when the structural body portion is fixed to the underbody chassis.

4. An electric vehicle according to any preceding claim, wherein the mounting structures on the structural body portion and the mounting structures on the underbody chassis are profiled such that the mating mounting structures have substantially matching profiles.

5. An electric vehicle according to any preceding claim, wherein one of each mating pair of the mounting structures has a male portion that is received in a female portion of the other of the mating pair.

6. An electric vehicle according to any preceding claim, wherein the male portion includes a tapered portion, tapered from its base to its end to help with location during assembly; optionally, the female portion is correspondingly tapered.

7. An electric vehicle according to any preceding claim, wherein the vehicle comprises fixing means to fix the structural body portion to the underbody chassis, the fixing means applied at the interface between each mating pair of mounting structures.

8. An electric vehicle according to any preceding claim, where the structural body portion comprises a plurality of structural members, the structural members forming at least part of a structural frame of the body and wherein the structural members comprise some or all of the mounting structures of the vehicle body.

9. An electric vehicle according to claim 8, where the mounting structures of the structural body portion are formed in ends of the structural members, for example as castings, the mounting structures being at least partly formed by that casting.

10. An electric vehicle according to claim 8 or claim 9, wherein the vehicle comprises one or more body panel fixed to the structural members.

11. An electric vehicle according to any preceding claim, where the mounting structures of the underbody chassis are formed in structure of the underbody chassis by casting,

12. An electric vehicle according to claim 11, wherein the mounting structures of the underbody chassis formed as castings in cast sections of the underbody chassis.

13. An electric vehicle according to any preceding claim, wherein the electric vehicle is a commercial electric vehicle.

14. Components for an electric vehicle, the components comprising:
an underbody chassis, the underbody chassis comprising an upper side and a lower side and arranged to contain, between the upper side and a lower side, at least one of a battery and an electric motor of an electric powertrain of the vehicle; and
a structural body portion of a vehicle body for fixing to the underbody chassis,
wherein each of the structural body portion and the underbody chassis comprises a plurality of mounting structures, each mounting structure on the structural body portion arranged to mate with a respective mounting structure on the underbody chassis.

15. A method of assembling an underbody chassis and structural body portion of an electric vehicle, wherein the underbody chassis comprises an upper side and a lower side and contains, between the upper side and a lower side, at least one of a battery and an electric motor of an electric powertrain of the vehicle; each of the underbody chassis and the structural members having a respective plurality of mounting structures, the mounting structures on the structural members arranged to mate with mounting structures on the underbody chassis; the method comprising:
mounting the structural body portion to the underbody chassis such that the mounting structures on the structural body portion mate with the mounting structures on the underbody chassis; and
fixing the structural body portion to the underbody chassis.

## Amended claims

### Amended claims in accordance with Rule 137(2) EPC.

1. An electric vehicle comprising:
an underbody chassis (10), the underbody chassis (10) comprising an upper side and a lower
side and containing, between the upper side and a lower side, at least one of a battery and an electric motor of an electric powertrain of the vehicle; and
a structural body portion (100) of a vehicle body for fixing to the underbody chassis (10),
wherein each of the structural body portion (100) and the underbody chassis (10) comprises a plurality of mounting structures (139, 149), each mounting structure (139) on the structural body portion (100) arranged to mate with a respective mounting structure (149) on the underbody chassis (10),
wherein the structural body portion (100) comprises a plurality of structural members (100, 110, 120, 122, 124, 126), the structural members forming at least part of a structural frame of the body (100), and
wherein the structural members comprise some or all of the mounting structures (139) of the vehicle body (100).

2. An electric vehicle according to claims 1, wherein the mounting structures on the structural body portion (100) and on the underbody chassis (10) are located to locate the structural body portion (100) relative to the underbody chassis (10) when the respective structures mate.

3. An electric vehicle according to any preceding claim, wherein the mounting structures on the structural body portion (100) and on the underbody chassis (10) are profiled to provide structural support of the structural body portion (100) relative to the underbody chassis (10) when the respective structures mate and when the structural body portion (100) is fixed to the underbody chassis (10).

4. An electric vehicle according to any preceding claim, wherein the mounting structures on the structural body portion (100) and the mounting structures on the underbody chassis (10) are profiled such that the mating mounting structures have substantially matching profiles.

5. An electric vehicle according to any preceding claim, wherein one of each mating pair of the mounting structures (139, 149) has a male portion that is received in a female portion of the other of the mating pair.

6. An electric vehicle according to claim 5, wherein the male portion includes a tapered portion, tapered from its base to its end to help with location during assembly; optionally, the female portion is correspondingly tapered.

7. An electric vehicle according to any preceding claim, wherein the vehicle comprises fixing means (138) to fix the structural body portion (100) to the underbody chassis (10), the fixing means (138) applied at the interface between each mating pair of mounting structures.

8. An electric vehicle according to any preceding claim, where the mounting structures (139) of the structural body portion (100) are formed in ends of the structural members (122), for example as castings, the mounting structures (139) being at least partly formed by that casting.

9. An electric vehicle according to any preceding claim, wherein the vehicle comprises one or more body panel fixed to the structural members (100, 110, 120, 122, 124, 126).

10. An electric vehicle according to any preceding claim, where the mounting structures (149) of the underbody chassis (10) are formed in structure of the underbody chassis (10) by casting.

11. An electric vehicle according to claim 10, wherein the mounting structures (149) of the underbody chassis (10) formed as castings in cast sections of the underbody chassis (10).

12. An electric vehicle according to any preceding claim, wherein the electric vehicle is a commercial electric vehicle.

13. Components for an electric vehicle, the components comprising:
an underbody chassis (10), the underbody chassis (10) comprising an upper side and a lower side and arranged to contain, between the upper side and a lower side, at least one of a battery and an electric motor of an electric powertrain of the vehicle; and
a structural body portion (100) of a vehicle body for fixing to the underbody chassis (10),
wherein each of the structural body portion (100) and the underbody chassis (10) comprises a plurality of mounting structures (139, 149), each mounting structure (139) on the structural body portion (100) arranged to mate with a respective mounting structure (149) on the underbody chassis (10),
wherein the structural body portion (100) comprises a plurality of structural members (100, 110, 120, 122, 124, 126), the structural members forming at least part of a structural frame of the body (100), and
wherein the structural members comprise some or all of the mounting structures (139) of the vehicle body (100).

14. A method of assembling an underbody chassis (10) and structural body portion (100) of an electric vehicle, wherein the underbody chassis (10) comprises an upper side and a lower side and contains, between the upper side and a lower side, at least one of a battery and an electric motor of an electric powertrain of the vehicle; each of the underbody chassis (10) and the structural body portion (100) having a respective plurality of mounting structures (139, 149), the mounting structures (139) on the structural body portion (100) arranged to mate with mounting structures (149) on the underbody chassis (10), wherein the structural body portion (100) comprises a plurality of structural members (100, 110, 120, 122, 124, 126), the structural members forming at least part of a structural frame of the body (100), and wherein the structural members comprise some or all of the mounting structures (139) of the vehicle body (100); the method comprising:
mounting the structural body portion (100) to the underbody chassis (10) such that the mounting structures (139) on the structural body portion (100) mate with the mounting structures (149) on the underbody chassis (10); and
fixing the structural body portion (100) to the underbody chassis (10).
